# FASCICULE DE BREVET EUROPEEN

(11) **EP 4 412 472 B1**
(45) Date de publication et mention de la délivrance du brevet: **08.04.2026**
(21) Numéro de dépôt: 22793539.2
(22) Date de dépôt: 21.09.2022
(51) Int. Cl.: A23P 30/20

(54) **IMPRIMANTE TRIDIMENSIONNELLE RÉALISANT UNE CUISSON D'UN ALIMENT**
3D-DRUCKER ZUM BACKEN/KOCHEN EINES LEBENSMITTELS
3D PRINTER PERFORMING COOKING OF A FOODSTUFF

(30) Priorité: 06.10.2021 EP 21201328
(43) Date de publication de la demande: 14.08.2024
(73) Titulaire: SEB S.A., 69130 Ecully (FR); Institut National de la Recherche pour l'Agriculture, l'Alimentation et l'Environnement, 75007 Paris (FR); Institut National des Sciences et Industries du Vivant et de l'Environnement, 91120 Palaiseau (FR); DAGO, 59100 Roubaix (FR)
(72) Inventeur: BLANDIN, Loïc, 69134 Ecully Cedex (FR); REGNIER, Matthieu, 59100 Roubaix (FR); MICHON, Camille, 92120 Montrouge (FR); PERRE, Giana, 91120 Palaiseau (FR); GUENARD LAMPRON, Valérie, 94160 Saint Mandé (FR); MASBERNAT, Laurena, 75014 Paris (FR)
(74) Mandataire: Germain Maureau
(86) Numéro de dépôt international: PCT/EP2022/076216
(87) Numéro de publication internationale: WO 2023/057212

(56) Documents cités:
- WO-A1-2014/190217
- WO-A1-2017/006330
- CN-B- 103 876 263
- US-A1- 2018 192 656

## Description

L'invention concerne le domaine des imprimantes tridimensionnelles et plus particulièrement une imprimante tridimensionnelle pour une fabrication d'une préparation alimentaire et un procédé de fabrication d'une préparation alimentaire mettant en œuvre une telle imprimante tridimensionnelle.

Un aliment désigne une substance comestible qui est notamment caractérisée par la matière qui la compose comme par exemple une sauce tomate, une pâte à gâteau, du chocolat, une purée d'avocat ou une pâte à pizza.

L'aliment est également caractérisé par une texture. Plus précisément, la texture d'un aliment correspond à une qualité physique de l'aliment comprenant sa densité, sa viscosité, et son homogénéité. Ainsi, un même aliment peut avoir plusieurs textures. Par exemple, le beurre a une texture dure à 0°C et visqueuse à 20°C, un biscuit a une texture visqueuse avant une cuisson et croustillante après la cuisson.

L'aliment est enfin caractérisé par un niveau de cuisson. Dans la présente description, la cuisson consiste en un chauffage de l'aliment qui modifie d'une part la matière, par retrait d'au moins une partie de l'eau et réaction chimique, et d'autre part la texture de l'aliment. Le niveau de cuisson va de cru à cuit.

Dans la présente description, l'aliment est adapté à une impression par une imprimante tridimensionnelle. Ainsi, il présente donc une texture ayant une viscosité adaptée à un procédé d'extrusion à chaud ou à froid.

Une préparation alimentaire correspond à une mise en oeuvre d'au moins un aliment dans sa géométrie, et sa cuisson. La préparation alimentaire a une forme géométrique définie et un niveau de cuisson donnée. La préparation alimentaire peut comprendre plusieurs aliments. Bien entendu, la préparation alimentaire est également caractérisée par la matière qui la compose et la texture.

L'invention trouve particulièrement une application pour un aliment comprenant de l'eau et de l'amidon en quantité suffisante pour permettre une augmentation de viscosité après un processus de gélatinisation.

Il est connu d'utiliser une imprimante tridimensionnelle pour mettre en œuvre un aliment comme cela est décrit dans le document WO2017006330. Plus précisément, ce document divulgue une imprimante tridimensionnelle comprenant un réservoir contenant un aliment et une buse d'extrusion configurée pour déposer un cordon de l'aliment sur une surface d'impression. L'imprimante tridimensionnelle comprend également un dispositif permettant de cuire le cordon déposé sur la surface d'impression, et donc l'ensemble de la préparation alimentaire.

L'inconvénient posé par cette imprimante tridimensionnelle est de cuire l'aliment après dépôt du cordon de l'aliment sur la surface d'impression. Ainsi il n'est pas possible de régler finement la cuisson de l'aliment de sorte à obtenir des formes tridimensionnelles complexes, c'est-à-dire par exemple comprenant un morceau de cordon ne reposant pas par-dessus un autre morceau de cordon, et des textures différentes de la préparation alimentaire. De plus, le cordon de l'aliment au contact de la surface d'impression sera très cuit, tandis que le cordon de l'aliment déposé sur le dessus d'un autre cordon sera peu cuit. La cuisson de la préparation alimentaire est donc non homogène. Le document CN103876263B divulgue également une imprimante tridimensionnelle pour la fabrication d'une préparation alimentaire.

L'invention a pour but de remédier à tout ou partie des inconvénients précités en proposant, une imprimante tridimensionnelle selon la revendication 1.

Le réservoir comprend un volume intérieur fermé dans lequel l'aliment est positionné. Par exemple, le réservoir peut être un contenant ou un emballage ayant une forme variée, pré-rempli industriellement, ou vide, et solide ou souple.

La surface d'impression est de préférence sensiblement plane.

La buse d'extrusion est reliée au réservoir de sorte à permettre un écoulement de l'aliment à l'extérieur du réservoir, à travers la buse d'extrusion. Une longueur et un diamètre de la buse d'extrusion est prédéterminée et détermine un diamètre du cordon.

La buse d'extrusion est mobile dans un plan d'impression s'étendant parallèlement à la surface d'impression.

La buse d'extrusion et/ou la surface d'impression est mobile suivant un axe normal au plan d'impression.

L'élément de cuisson permet principalement de modifier la consistance de l'aliment.

L'élément de préchauffage permet de modifier la teneur en eau et donc la viscosité de l'aliment. Après préchauffage, l'aliment doit présenter une texture permettant son extrusion.

Le positionnement spécifique de l'élément de préchauffage permet d'appliquer un chauffage général de l'aliment dans le réservoir de sorte à permettre une cuisson plus rapide par l'élément de cuisson.

Dans le cas d'un aliment comprenant de l'eau et de l'amidon en quantité suffisante pour permettre une augmentation de viscosité après un processus de gélatinisation, ce préchauffage actif constitue une première phase d'amorce du processus de transformation de la matière. Cela permet d'accélérer la cinétique de chauffage nécessaire pour démarrer le processus de gélatinisation de l'amidon qui se déroule au cours d'une deuxième phase de transformation subséquente et engendrée par le chauffage procuré par l'élément de cuisson. La première phase d'amorce du processus de transformation de la matière n'est pas suffisante pour assurer une bonne tenue du cordon sur la surface d'impression tandis que la deuxième phase au cours de laquelle le processus de gélatinisation survient, permet cette bonne tenue du cordon sur la surface d'impression. La transformation de la matière signifie que la structure physico-chimique de l'aliment est modifiée.

L'élément de cuisson et l'élément de préchauffage peuvent être utilisés séquentiellement ou en même temps, et suivant une puissance déterminée, de sorte à parfaitement obtenir le niveau de cuisson et la texture désirée de la préparation alimentaire.

L'élément de cuisson est positionné au niveau de la buse d'extrusion de sorte à réaliser par chauffage au moins une partie de la cuisson du cordon avant que celui-ci ne soit déposé sur la surface d'impression. Ainsi, l'aliment avant extrusion et l'aliment déposé sur la surface d'impression ne présente pas le même niveau de cuisson. L'élément de cuisson peut plus précisément être positionné dans la buse d'extrusion, par exemple sous la forme d'un fil résistif intégré dans une matière constitutive de la buse d'extrusion, ou être positionné en sortie de la buse d'extrusion. Dans ce dernier cas, le cordon est formé mais n'est pas encore en contact avec la surface d'impression.

Le positionnement spécifique de l'élément de cuisson permet d'appliquer une cuisson localisée sur une partie du cordon de l'aliment. Il est donc possible de faire varier le niveau de cuisson de l'aliment le long du cordon. Par exemple, il est possible de cuire à un premier niveau une première longueur du cordon puis de cuire à un deuxième niveau une deuxième longueur du cordon, le premier et le deuxième niveau de cuisson étant différents.

Le niveau de cuisson de l'aliment est donc particulièrement précis. Cela a pour avantage d'obtenir une préparation alimentaire dont un aliment présente des niveaux de cuisson différents. Cela permet également de réaliser des préparations alimentaires ayant des formes tridimensionnelles complexes qui seraient impossibles de réaliser sans l'élément de cuisson tel que décrit dans l'invention.

L'invention peut également présenter une ou plusieurs des caractéristiques suivantes prises seules ou en combinaison.

Selon un mode de réalisation, l'élément de cuisson présente une faible inertie par rapport à une vitesse d'extrusion du cordon.

Ainsi, l'élément de cuisson présente une grande réactivité de sorte à réaliser une cuisson localisée du cordon.

Selon un mode de réalisation, l'élément de cuisson est mobile avec la buse d'extrusion.

Selon un mode de réalisation, l'élément de cuisson est mobile autour de la buse d'extrusion dans un plan d'impression s'étendant parallèlement à la surface d'impression.

Ainsi, l'élément de cuisson peut être judicieusement positionné en fonction du déplacement de la buse d'extrusion. Autrement dit, l'élément de cuisson est toujours positionné au plus proche du dépôt du cordon.

Selon un mode de réalisation, l'élément de cuisson tourne autour de la buse d'extrusion de sorte à homogénéiser la cuisson du cordon.

Selon un mode de réalisation, l'élément de cuisson est configuré pour diminuer une teneur en eau du cordon pour conférer une viscosité déterminée au cordon lui permettant d'assurer la tenue sous son propre poids sur la surface d'impression.

L'élément de cuisson permet d'assécher l'aliment déposé sous la forme d'un cordon et ainsi d'obtenir un niveau de cuisson et une texture prédéterminée.

Selon un mode de réalisation, l'élément de cuisson utilise une technologie choisie parmi : un chauffage ohmique, un chauffage par rayonnement, un chauffage par air chaud et un chauffage par conduction
Le chauffage ohmique est un procédé de traitement thermique d'un aliment consistant à induire dans ce dernier de la chaleur par le passage d'un courant électrique. Le chauffage ohmique est basé sur les propriétés de résistance électrique de l'aliment et l'effet Joule.

Le chauffage par rayonnement peut utiliser tous types de rayonnement dont le rayonnement infrarouge, laser, et micro-onde.

Le chauffage par air chaud consiste à entourer le cordon d'un air chaud.

Le chauffage par conduction peut être un chauffage par induction.

Selon un mode de réalisation, l'élément de préchauffage est mobile avec le réservoir.

Selon un mode de réalisation, l'élément de préchauffage est configuré pour diminuer la teneur en eau de l'aliment en limitant le changement de viscosité de manière à pouvoir conserver la possibilité d'extruder l'au moins un aliment.

Ainsi, l'élément de préchauffage permet d'assécher l'aliment avant son extrusion sous la forme d'un cordon et d'obtenir un niveau de cuisson et une texture prédéterminée de la préparation alimentaire.

Selon un mode de réalisation, l'élément de préchauffage utilise une technologie choisie parmi : un chauffage ohmique, un chauffage par rayonnement, et un chauffage par conduction.

Le chauffage par rayonnement peut utiliser tous types de rayonnement dont le rayonnement infrarouge, laser, et micro-onde.

Le chauffage par conduction peut être un chauffage par induction ou un fil résistif au contact de l'aliment.

Selon un mode de réalisation, l'imprimante tridimensionnelle comprend, en plus de l'au moins un élément de cuisson, au moins un élément de chauffage additionnel configuré pour chauffer la préparation alimentaire imprimée sur la surface d'impression.

L'élément de chauffage additionnel permet de maintenir la température et/ou de modifier le niveau de cuisson de la préparation alimentaire et donc sa texture.

L'élément de chauffage additionnel est positionné de sorte à chauffer la préparation alimentaire déposée sur la surface d'impression. L'élément de chauffage additionnel applique donc un chauffage sur au moins une zone de la préparation alimentaire. L'élément de chauffage additionnel a une action moins ciblée que l'élément de cuisson.

L'élément de chauffage additionnel permet d'induire un gradient de température à l'intérieur de la préparation alimentaire.

L'élément de cuisson, l'élément de préchauffage et l'élément de chauffage additionnel peuvent être utilisés séquentiellement ou en même temps, et suivant une puissance déterminée, de sorte à parfaitement obtenir le ou les niveaux de cuisson et la texture désirée de la préparation alimentaire.

Selon un mode de réalisation, l'élément de chauffage additionnel utilise une technologie choisie parmi : un chauffage par conduction, un chauffage par rayonnement ou un chauffage par air chaud.

Le chauffage par air chaud consiste à souffler un air chaud à proximité ou sur la préparation alimentaire.

Le chauffage par conduction peut être un chauffage par induction.

Selon un mode de réalisation, l'élément de chauffage additionnel est soit intégré dans un plateau dont une face correspond à la surface d'impression, soit agencé en regard de la surface d'impression d'un côté opposé au plateau.

Le plateau de l'imprimante tridimensionnelle est en regard de la buse d'extrusion. Le cordon, et donc la préparation alimentaire, est déposé entre la buse d'extrusion et le plateau, sur la surface d'impression.

Lorsque l'élément de chauffage est intégré au plateau, le chauffage se réalise par conduction dans la préparation alimentaire.

Selon un mode de réalisation, l'élément de chauffage additionnel est mobile avec la buse d'extrusion.

Selon un mode de réalisation, l'élément de chauffage additionnel tourne autour de la buse d'extrusion dans un plan d'impression s'étendant parallèlement à la surface d'impression. Selon un mode de réalisation, l'élément de chauffage additionnel est fixe par rapport à la surface d'impression.

Selon un mode de réalisation, l'élément de cuisson correspond à l'élément de chauffage additionnel.

Selon un mode de réalisation, l'imprimante tridimensionnelle comprend un dispositif d'extrusion configuré pour fabriquer le cordon de l'aliment de manière continue.

Le dispositif d'extrusion permet de faire passer l'aliment du réservoir à la buse d'extrusion de sorte à former un cordon continu de l'aliment.

De manière alternative, le dispositif d'extrusion est configuré pour fabriquer le cordon de l'aliment de manière discontinue, c'est-à-dire en goutte à goutte.

Le dispositif d'extrusion peut être un piston, une pompe, une vis sans fin, ou un élément déformant configuré pour venir appuyer sur un contenant fermé déformable de sorte à extraire l'aliment.

Selon un mode de réalisation, l'imprimante tridimensionnelle comprend une enceinte délimitant un espace interne comprenant au moins une partie de la surface d'impression, ladite enceinte étant configurée pour permettre un contrôle d'une température de l'espace interne de l'enceinte. Ainsi, l'enceinte permet de contrôler parfaitement des conditions notamment de température dans lesquelles l'impression est réalisée.

Selon un mode de réalisation, l'espace interne de l'enceinte comprend au moins en partie l'au moins une buse d'extrusion.

Selon un mode de réalisation, l'imprimante comprend également une cloche disposée sur la surface d'impression et délimitant un espace interne comprenant au moins une partie de préparation alimentaire, ladite cloche étant configurée pour permettre un contrôle d'une température de l'espace interne de la cloche.

L'invention porte également sur un procédé de fabrication d'une préparation alimentaire mettant en oeuvre une imprimante tridimensionnelle selon la présente invention.

Selon un mode de réalisation, le procédé comprend une étape de chauffe dans laquelle l'élément de cuisson, et/ou l'au moins un élément de chauffage additionnel, et/ou l'au moins un élément de préchauffage induisent un gradient de température dans l'au moins un aliment ou dans la préparation alimentaire selon une séquence prédéfinie.

Le procédé selon l'invention permet d'obtenir une cuisson parfaitement maitrisée de la préparation alimentaire.

Le procédé de fabrication comprend en outre une étape de chargement dans laquelle le réservoir est rempli avec un aliment. L'aliment pouvant être une préparation réalisée en amont par l'utilisateur ou une préparation industrielle.

Lorsque l'aliment comprend de l'eau et de l'amidon en quantité suffisante pour permettre une augmentation de viscosité après un processus de gélatinisation, le procédé de fabrication comprend une première phase de transformation de la matière réalisée par un élément de préchauffage et une deuxième phase de gélatinisation réalisée par l'élément de cuisson.

L'invention sera mieux comprise, grâce à la description ci-après, qui se rapporte à plusieurs modes de réalisation selon la présente invention, donnés à titre d'exemples non limitatifs et expliqués avec référence aux dessins schématiques annexés, dans lesquels :
La figure 1 est une représentation schématique d'une imprimante tridimensionnelle selon un premier mode de réalisation ;
La figure 2 est une représentation schématique d'une imprimante tridimensionnelle selon un deuxième mode de réalisation ;
La figure 3 est une représentation schématique d'une imprimante tridimensionnelle selon un troisième mode de réalisation ;

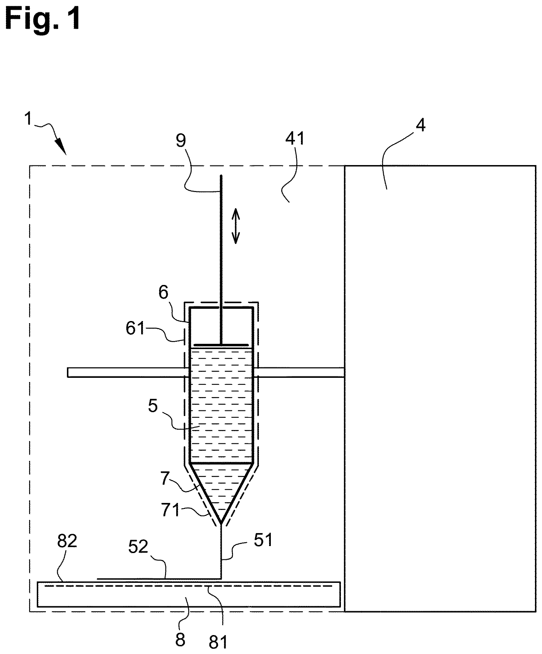

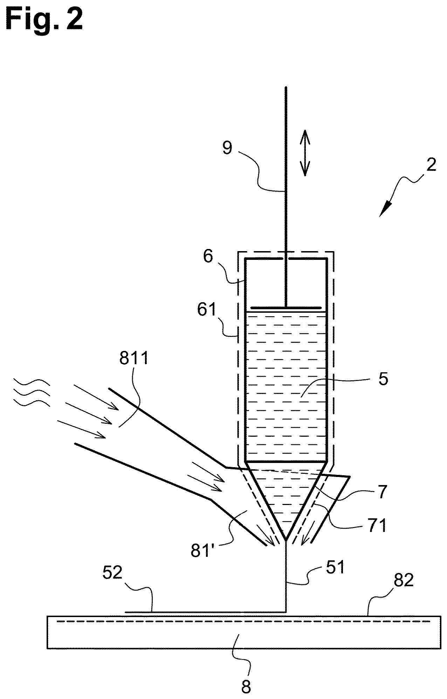

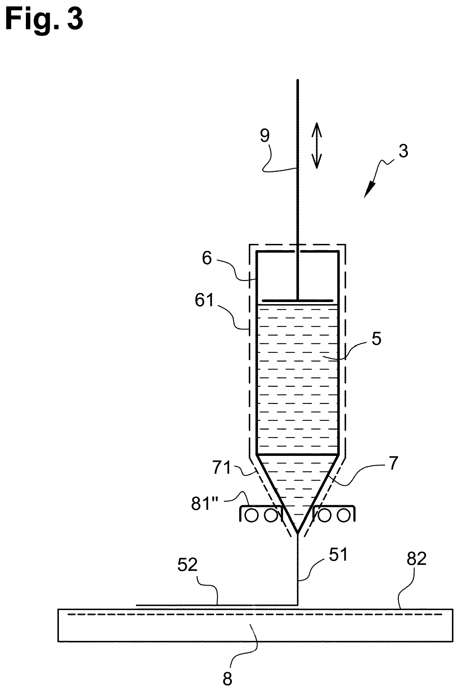

La suite de la description porte sur trois modes de réalisation d'un dispositif selon l'invention, en référence aux figures 1 à 3 dans lesquelles les éléments ou organes structurellement ou fonctionnellement identiques ou similaires sont désignés par des références numériques identiques.

Une imprimante tridimensionnelle 1, 2, 3 selon l'invention est conçue pour une fabrication d'une préparation alimentaire 52 à partir d'un aliment 5. Dans chaque mode de réalisation, l'imprimante tridimensionnelle 1, 2, 3 comprend un réservoir 6, une buse d'extrusion 7, un élément de cuisson 71, un élément de préchauffage 61, un élément de chauffage additionnel 81, 81', 81", un dispositif d'extrusion 9 et un plateau 8.

Le réservoir 6 comprend un volume intérieur fermé dans lequel l'aliment 5 est positionné. Le réservoir 6 peut être de tout type. Sur les figures, le réservoir est un cylindre pré-rempli.

Le plateau 8 présente une surface sensiblement plane correspondant à une surface d'impression 82.

La buse d'extrusion 7 est reliée au réservoir 6 de sorte à permettre un écoulement de l'aliment 5. Une longueur et un diamètre de la buse d'extrusion 7 est prédéterminée. La buse d'extrusion 7 est configurée pour déposer un cordon 51 dudit aliment 5 sur la surface d'impression 82 de sorte à former la préparation alimentaire 52.

La buse d'extrusion 7 est mobile dans un plan d'impression s'étendant parallèlement à la surface d'impression 82. La buse d'extrusion 7 et/ou le plateau 8 est mobile suivant un axe parallèle au plan d'impression et à la surface d'impression 82.

Le dispositif d'extrusion 9 permet de faire passer l'aliment 5 du réservoir 6 à la buse d'extrusion 7 de sorte à former le cordon 51 en continu de l'aliment 5.

L'élément de cuisson 71 est un chauffage ohmique, un chauffage par rayonnement, un chauffage par air chaud ou un chauffage par conduction, qui est configuré pour réaliser par chauffage tout ou partie d'une cuisson du cordon 51 avant un contact avec la surface d'impression 82. L'élément de cuisson 71 est positionné en sortie de la buse d'extrusion 7 de sorte à réaliser par chauffage au moins une partie de la cuisson du cordon 51 avant que celui-ci ne soit déposé sur la surface d'impression 82.

L'élément de cuisson 71 est mobile avec la buse d'extrusion 7 et peut tourner autour de la buse d'extrusion 7 dans le plan d'impression.

L'élément de cuisson 71 diminue une teneur en eau de l'aliment 5 pour conférer une viscosité déterminée au cordon 51 lui permettant d'assurer la tenue sous son propre poids sur la surface d'impression 82.

L'élément de préchauffage 61 est un chauffage ohmique, un chauffage par rayonnement, un chauffage par air chaud ou un chauffage par conduction, qui permet de réduire le temps total d'impression. En effet, l'élément de préchauffage 61 fait passer l'aliment depuis une température initiale vers une température cible de préchauffage, l'aliment passant ensuite de la température de préchauffage à la température de cuisson après son extrusion.

En outre, l'élément de préchauffage 61 est configuré pour diminuer une teneur en eau de l'aliment en limitant le changement de viscosité de manière à pouvoir conserver la possibilité d'extruder l'au moins un aliment.

L'élément de préchauffage 61 est mobile avec le réservoir 6.

L'élément de préchauffage 61 est agencé pour transférer davantage de calories à l'aliment que l'élément de cuisson 71. En effet, l'élément de préchauffage 61 étant adossé au réservoir 6, celui-ci partage une surface d'échange avec la totalité de l'aliment contenu dans le réservoir 6 bien supérieure à la surface d'échange partagé entre l'élément de cuisson 71 et seulement une partie de l'aliment lors de son passage dans la buse d'extrusion 7 formant ainsi le cordon 51 à déposer sur la surface d'impression 82.

Dans le cas d'un aliment comprenant de l'eau et de l'amidon en quantité suffisante pour permettre une augmentation de viscosité après un processus de gélatinisation, l'action de l'élément de préchauffage 61 sur la totalité de l'aliment contenu dans le réservoir 6 permet d'initier une première phase d'amorce du processus de transformation de la matière. Cette première phase de préchauffage global de l'aliment est suivie d'une deuxième phase de cuisson localisée engendrant la gélatinisation de l'amidon contenu dans l'aliment traversant la buse d'extrusion 7. Ainsi, la cinétique de chauffage menant au processus de gélatinisation de l'amidon est accélérée. La première phase de préchauffage global amorce le processus de transformation de la matière tout en maintenant une viscosité satisfaisante pour permettre l'extrusion de l'aliment du réservoir alors que la deuxième phase de cuisson localisée va initier le processus de gélatinisation conférant au cordon extrudé des propriétés mécaniques lui permettant d'être déposé sur la surface d'impression 82 sans se déformer sous son propre poids ou sous le poids des couches supérieures.

La température de pré-chauffage ne doit pas dépasser 50°C afin de ne pas initier le processus de gélatinisation dans le réservoir 6. La température de cuisson lors de la deuxième phase de cuisson localisée au niveau de la buse d'extrusion 7 doit quant à elle être comprise entre 80°c et 85°C pour s'assure de la gélatinisation complète de l'amidon contenu dans l'aliment.

L'utilisation de l'élément de préchauffage 61 et de l'élément de cuisson 71 peut se combiner pour réaliser un préchauffage avant et pendant l'extrusion ou pour réaliser un préchauffage uniquement avant l'extrusion. Le fait de préchauffer avant et pendant l'extrusion présente l'avantage de maintenir l'aliment contenu dans le réservoir à la température de préchauffage permettant de conserver un état de transformation de la matière, sans toutefois atteindre la phase de gélatinisation, pour optimiser la cinétique de gélatinisation lors du passage de l'aliment au travers de la buse d'extrusion 7.

L'élément de chauffage additionnel 81, 81', 81" est configuré pour chauffer la préparation alimentaire 52 imprimée sur la surface d'impression 82. L'élément de chauffage additionnel 81, 81', 81" applique donc un chauffage sur au moins une zone de la préparation alimentaire 52. L'élément de chauffage additionnel 81, 81', 81" a une action moins ciblée que l'élément de cuisson 71.

L'élément de chauffage additionnel 81, 81', 81" permet d'induire un gradient de température à l'intérieur de la préparation alimentaire 52.

L'élément de chauffage additionnel 81, 81', 81" permet de maintenir la température et/ou de modifier le niveau de cuisson de la préparation alimentaire 82 et donc sa texture.

Par ailleurs, dans le premier mode de réalisation, l'imprimante tridimensionnelle 1 comprend également une enceinte 41 et un bâti 4.

L'enceinte 41 délimite un espace interne comprenant tout ou partie de la surface d'impression 82. L'enceinte 41 est configurée pour permettre un contrôle d'une température de l'espace interne de l'enceinte 41.

En outre, l'espace interne de l'enceinte 41 comprend au moins en partie l'au moins une buse d'extrusion 7, voire l'ensemble du réservoir 6.

Le bâti 4 supporte l'enceinte 41, le réservoir 6, la buse d'extrusion 7, l'élément de cuisson 71 et le plateau 8.

Dans le premier mode de réalisation, l'élément de chauffage additionnel 81 est un chauffage par conduction intégré dans le plateau 8.

Dans le deuxième mode de réalisation, l'élément de chauffage additionnel 81' est un chauffage par air chaud 811 mobile avec la buse d'extrusion 7.

Dans le troisième mode de réalisation, l'élément de chauffage additionnel 81" est un chauffage par rayonnement mobile avec la buse d'extrusion 7.

Le procédé de fabrication de la préparation alimentaire 52 consiste à mettre en oeuvre l'imprimante tridimensionnelle 1, 2, 3 selon l'invention.

Le procédé de fabrication comprend en outre les étapes suivantes :
- Une étape de chargement dans laquelle le réservoir 6 est rempli avec un aliment 5;
- Une étape de chauffe dans laquelle l'aliment 5 est extrudé et, l'élément de cuisson 7, et/ou l'élément de chauffage additionnel 81, 81', 81", et/ou l'élément de préchauffage 61 induisent un gradient de température dans l'aliment 5 selon une séquence prédéfinie.

L'élément de cuisson 71, l'élément de préchauffage 61 et l'élément de chauffage additionnel 81, 81', 81" peuvent être utilisés séquentiellement ou en même temps, et suivant une puissance déterminée, de sorte à parfaitement obtenir le niveau de cuisson et la texture désirée de la préparation alimentaire 52.

Le niveau de cuisson de la préparation alimentaire 52 est donc particulièrement précis et il est possible d'obtenir une préparation alimentaire dont un aliment présente des niveaux de cuisson différents.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, à condition que le mode de réalisation résultant reste compris dans la portée des revendications.

## Revendications

1. Imprimante tridimensionnelle (1, 2, 3) pour une fabrication d'une préparation alimentaire (52) à partir d'au moins un aliment (5) comprenant de l'eau et de l'amidon en quantité suffisante pour permettre une augmentation de viscosité après un processus de gélatinisation, l'imprimante tridimensionnelle comprenant :
- au moins un réservoir (6) contenant l'au moins un aliment (5), l'au moins un réservoir (6) comprenant au moins un élément de préchauffage (61) pour engendrer un préchauffage actif à une température inférieure à 50°C et constituant une première phase d'amorce du processus de transformation de la matière pour augmenter la température de l'aliment à une température supérieure à sa température initiale de manière à permettre une diminution du temps de cuisson post extrusion de l'au moins un aliment (5), et
- au moins une buse d'extrusion (7) configurée pour déposer un cordon (51) dudit aliment (5) sur une surface d'impression (82), l'au moins une buse d'extrusion (7) comporte un élément de cuisson (71) configuré pour réaliser par chauffage tout ou partie d'une cuisson du cordon (51) avant un contact avec la surface d'impression (82) pour engendrer une deuxième phase du processus de transformation de la matière localisée au niveau de la buse d'extrusion (7), subséquente à la première phase d'amorce et engendrée par le chauffage procuré par l'élément de cuisson (71) à une température comprise entre 80°C et 85°C, le processus de gélatinisation complète de l'amidon contenue dans l'aliment (5) survenant au cours de cette deuxième phase du processus de transformation de la matière.

2. Imprimante tridimensionnelle (1, 2, 3) selon la revendication 1, dans laquelle l'élément de cuisson (71) est configuré pour diminuer une teneur en eau du cordon (51) pour conférer une viscosité déterminée au cordon (51) lui permettant d'assurer la tenue sous son propre poids sur la surface d'impression (82).

3. Imprimante tridimensionnelle (1, 2, 3) selon l'une quelconque des revendications précédentes, dans laquelle l'élément de cuisson (71) utilise une technologie choisie parmi : un chauffage ohmique, un chauffage par rayonnement, un chauffage par air chaud et un chauffage par conduction.

4. Imprimante tridimensionnelle (1, 2, 3) selon l'une des revendications 1 à 3, dans laquelle l'élément de préchauffage (61) est configuré pour diminuer la teneur en eau de l'aliment (5) en limitant le changement de viscosité de manière à pouvoir conserver la possibilité d'extruder l'au moins un aliment.

5. Imprimante tridimensionnelle (1, 2, 3) selon l'une des revendications 1 à 4, dans laquelle l'élément de préchauffage (61) utilise une technologie choisie parmi : un chauffage ohmique, un chauffage par rayonnement, et un chauffage par conduction.

6. Imprimante tridimensionnelle (1, 2, 3) selon l'une quelconque des revendications précédentes, comprenant, en plus de l'au moins un élément de cuisson (71), au moins un élément de chauffage additionnel (81, 81', 81") configuré pour chauffer la préparation alimentaire (52) imprimée sur la surface d'impression (82).

7. Imprimante tridimensionnelle (1, 2, 3) selon la revendication 6, dans laquelle l'élément de chauffage additionnel (81, 81', 81") utilise une technologie choisie parmi : un chauffage par conduction, un chauffage par rayonnement ou un chauffage par air chaud.

8. Imprimante tridimensionnelle (1, 2, 3) selon la revendication 6 ou 7, dans laquelle l'élément de chauffage additionnel (81, 81', 81") est soit intégré dans un plateau (8) dont une face correspond à la surface d'impression (82), soit agencé en regard de la surface d'impression (82) d'un côté opposé au plateau (8).

9. Imprimante tridimensionnelle (1, 2, 3) selon l'une quelconque des revendications précédentes, comprenant un dispositif d'extrusion (9) configuré pour fabriquer le cordon (51) de l'aliment (5) de manière continue.

10. Imprimante tridimensionnelle (1) selon l'une quelconque des revendications précédentes, comprenant une enceinte (41) délimitant un espace interne comprenant au moins une partie de la surface d'impression (82), ladite enceinte (41) étant configurée pour permettre un contrôle d'une température de l'espace interne de l'enceinte (41).

11. Imprimante tridimensionnelle (1) selon la revendication 10, dans laquelle l'espace interne de l'enceinte (41) comprend au moins en partie l'au moins une buse d'extrusion (7).

12. Procédé de fabrication d'une préparation alimentaire (52) mettant en œuvre une imprimante tridimensionnelle (1, 2, 3) selon l'une quelconque des revendications précédentes.

13. Procédé de fabrication selon la revendication 12, comprenant une étape de chauffe dans laquelle l'élément de cuisson (71), et/ou l'au moins un élément de chauffage additionnel (81, 81', 81"), et/ou l'au moins un élément de préchauffage (61) induisent un gradient de température dans l'au moins un aliment (5) ou dans la préparation alimentaire (52) selon une séquence prédéfinie.

## Patentansprüche

1. Dreidimensionaler Drucker (1, 2, 3) zur Herstellung einer Lebensmittelzubereitung (52) aus mindestens einem Lebensmittel (5), das ausreichend Wasser und Stärke enthält, um nach einem Gelatinierungsprozess eine Viskositätssteigerung zu bewirken, wobei der dreidimensionale Drucker umfasst:
∘ mindestens einen Behälter (6), der das mindestens eine Lebensmittel (5) enthält, wobei der mindestens eine Behälter (6) mindestens ein Vorheizelement (61) umfasst, um eine aktive Vorwärmung bei einer Temperatur unter 50°C zu bewirken und eine erste Initiierungsphase des Materialumwandlungsprozesses darstellt, um die Temperatur des Lebensmittels auf eine Temperatur über dessen Anfangstemperatur zu erhöhen, wodurch eine Verkürzung der Nach-Extrusions-Kochzeit des mindestens einen Lebensmittels (5) ermöglicht wird, und
∘ mindestens eine Extrusionsdüse (7), die konfiguriert ist, einen Strang (51) des genannten Lebensmittels (5) auf eine Druckfläche (82) abzulagern, wobei die mindestens eine Extrusionsdüse (7) ein Kochelement (71) beinhaltet, das konfiguriert ist, eine Erwärmung des gesamten oder eines Teils des Kochvorgangs des Strangs (51) vor einem Kontakt mit der Druckfläche (82) zu ermöglichen, um eine zweite Phase des Materialumwandlungsprozesses, lokalisiert an der Extrusionsdüse (7), einzuleiten, nachfolgenden zur ersten Initiationsphase und ausgelöst durch die Erwärmung, die durch das Kochelement (71) bei einer Temperatur zwischen 80°C und 85°C bereitgestellt wird, wobei der vollständige Gelatinierungsprozess der Stärke, die im Lebensmittel (5) enthalten ist, während dieser zweiten Phase des Materialumwandlungsprozesses auftritt.

2. Dreidimensionaler Drucker (1, 2, 3) gemäß Anspruch 1, wobei das Kochelement (71) konfiguriert ist, den Wassergehalt des Strangs (51) zu verringern, um ihm eine bestimmte Viskosität zu verleihen, die es ihm ermöglicht, unter seinem eigenen Gewicht auf der Druckfläche (82) standzuhalten.

3. Dreidimensionaler Drucker (1, 2, 3) gemäß einem der vorhergehenden Ansprüche, wobei das Kochelement (71) eine Technologie aus der Gruppe bestehend aus: ohmschem Heizen, Strahlungsheizen, Heißluftheizen und Leitungsheizen verwendet.

4. Dreidimensionaler Drucker (1, 2, 3) gemäß einem der Ansprüche 1 bis 3, wobei das Vorheizelement (61) konfiguriert ist, den Wassergehalt des Lebensmittels (5) zu verringern, während die Änderung der Viskosität begrenzt wird, um die Möglichkeit der Extrusion des mindestens einem Lebensmittels zu erhalten.

5. Dreidimensionaler Drucker (1, 2, 3) gemäß einem der Ansprüche 1 bis 4, wobei das Vorheizelement (61) eine Technologie aus der Gruppe bestehend aus: ohmschem Heizen, Strahlungsheizen und Leitungsheizen verwendet.

6. Dreidimensionaler Drucker (1, 2, 3) gemäß einem der vorhergehenden Ansprüche, umfassend zusätzlich zu mindestens einem Kochelement (71) mindestens ein zusätzliches Heizelement (81, 81', 81"), das konfiguriert ist, die gedruckte Lebensmittelzubereitung (52) auf der Druckfläche (82) zu erhitzen.

7. Dreidimensionaler Drucker (1, 2, 3) gemäß Anspruch 6, wobei das zusätzliche Heizelement (81, 81', 81") eine Technologie aus der Gruppe bestehend aus: Leitungsheizen, Strahlungsheizen oder Heißluftheizen verwendet.

8. Dreidimensionaler Drucker (1, 2, 3) gemäß Anspruch 6 oder 7, wobei das zusätzliche Heizelement (81, 81', 81") entweder in ein Tablett (8), dessen eine Seite die Druckfläche (82) bildet, integriert ist, oder gegenüber der Druckfläche (82) auf der gegenüberliegenden Seite des Tabletts (8) angeordnet ist.

9. Dreidimensionaler Drucker (1, 2, 3) gemäß einem der vorhergehenden Ansprüche, umfassend ein Extrusionsgerät (9), das konfiguriert ist, den Strang (51) des Lebensmittels (5) kontinuierlich herzustellen.

10. Dreidimensionaler Drucker (1) gemäß einem der vorhergehenden Ansprüche, umfassend ein Gehäuse (41), das einen Innenraum definiert, der mindestens einen Teil der Druckfläche (82) umfasst, wobei das Gehäuse (41) konfiguriert ist, die Temperatur des Innenraums im Gehäuse (41) zu steuern.

11. Dreidimensionaler Drucker (1) gemäß Anspruch 10, wobei der Innenraum des Gehäuses (41) mindestens teilweise die mindestens eine Extrusionsdüse (7) umfasst.

12. Verfahren zur Herstellung einer Lebensmittelzubereitung (52), das einen dreidimensionalen Drucker (1, 2, 3) gemäß einem der vorhergehenden Ansprüche umfasst.

13. Verfahren gemäß Anspruch 12, umfassend einen Heizschritt, in dem das Kochelement (71) und/oder mindestens ein zusätzliches Heizelement (81, 81', 81") und/oder mindestens ein Vorheizelement (61) einen Temperaturgradienten im mindestens einem Lebensmittel (5) oder in der Lebensmittelzubereitung (52) gemäß einer vordefinierten Sequenz induzieren.

## Claims

1. Three-dimensional printer (1, 2, 3) for producing a food preparation (52) from at least one food item (5) comprising water and starch in sufficient quantity to allow an increase in viscosity after a gelatinization process, the three-dimensional printer comprising:
∘ at least one reservoir (6) containing the at least one food item (5), the at least one reservoir (6) comprising at least one preheating element (61) to generate active preheating at a temperature below 50°C, constituting a first initiation phase of the material transformation process to raise the temperature of the food item to a temperature higher than its initial temperature, thereby allowing a reduction in the post-extrusion cooking time of the said food item (5), and
∘ at least one extrusion nozzle (7) configured to deposit a cord (51) of the said food item (5) onto a printing surface (82), the at least one extrusion nozzle (7) includes a cooking element (71) configured to perform heating of at least part of the cooking of the cord (51) before contact with the printing surface (82) to initiate a second phase of the material transformation process localized at the extrusion nozzle (7), subsequent to the first initiation phase and triggered by the heating provided by the cooking element (71) at a temperature between 80°C and 85°C, the complete gelatinization process of the starch contained in the food item (5) occurring during this second material transformation phase.

2. Three-dimensional printer (1, 2, 3) according to claim 1, wherein the cooking element (71) is configured to reduce the water content of the cord (51) to confer a determined viscosity allowing it to maintain its structure under its own weight on the printing surface (82).

3. Three-dimensional printer (1, 2, 3) according to any preceding claim, wherein the cooking element (71) employs a technology selected from: ohmic heating, radiant heating, hot air heating, and conductive heating.

4. Three-dimensional printer (1, 2, 3) according to one of claims 1 to 3, wherein the preheating element (61) is configured to reduce the water content of the food item (5) while limiting the change in viscosity to maintain the ability to extrude the at least one food item.

5. Three-dimensional printer (1, 2, 3) according to one of claims 1 to 4, wherein the preheating element (61) uses a technology selected from: ohmic heating, radiant heating, and conductive heating.

6. Three-dimensional printer (1, 2, 3) according to any preceding claim, further comprising, in addition to the at least one cooking element (71), at least one additional heating element (81, 81', 81") configured to heat the printed food preparation (52) on the printing surface (82).

7. Three-dimensional printer (1, 2, 3) according to claim 6, wherein the additional heating element (81, 81', 81") uses a technology selected from: conductive heating, radiant heating, or hot air heating.

8. Three-dimensional printer (1, 2, 3) according to claim 6 or 7, wherein the additional heating element (81, 81', 81") is integrated into a tray (8) whose one side forms the printing surface (82), or arranged facing the printing surface (82) on the opposite side of the tray (8).

9. Three-dimensional printer (1, 2, 3) according to any preceding claim, comprising an extrusion device (9) configured to continuously produce the cord (51) of the food item (5).

10. Three-dimensional printer (1) according to any preceding claim, comprising an enclosure (41) defining an internal space that includes at least part of the printing surface (82), said enclosure (41) being configured to allow control of the temperature of the internal space within the enclosure (41).

11. Three-dimensional printer (1) according to claim 10, wherein the internal space of the enclosure (41) includes at least part of the at least one extrusion nozzle (7).

12. Method for producing a food preparation (52) implementing a three-dimensional printer (1, 2, 3) according to any preceding claim.

13. Method according to claim 12, including a heating step in which the cooking element (71), and/or the at least one additional heating element (81, 81', 81"), and/or the at least one preheating element (61) induce a temperature gradient in at least one food item (5) or in the food preparation (52) according to a predefined sequence.
